# EUROPÄISCHE PATENTSCHRIFT

(11) **EP 0 384 023 B1**
(45) Veröffentlichungstag und Bekanntmachung des Hinweises auf die Patenterteilung: **13.04.1994**
(21) Anmeldenummer: 89123100.3
(22) Anmeldetag: 14.12.1989
(51) Int. Cl.: E04D 11/00

(54) **Trägerplatte für Dachbegrünungen**
Carrier board for roof turfings
Plaque porteuse pour gazonner un toit

(30) Priorität: 23.02.1989 DE 3905522
(43) Veröffentlichungstag der Anmeldung: 29.08.1990
(73) Patentinhaber: Steinbronn, Hans, D-55124 Mainz (DE)
(72) Erfinder: Steinbronn, Hans, D-55124 Mainz (DE)
(74) Vertreter: Weber, Dieter, Dr.

(56) Entgegenhaltungen:
- EP-A- 0 266 701
- DE-A- 2 755 958
- DE-A- 3 045 390
- DE-A- 3 712 867

## Beschreibung

Die vorliegende Erfindung betrifft eine Trägerplatte für Dachbegrünungen, welche aus einem im wesentlichen wasserundurchlässigen Material besteht, wobei die Platte mindestens teilweise durch Zwischenwände abgetrennte Zellen zur Speicherung von Wasser aufweist, sowie Drainageeinrichtungen, welche an den Zellen angeordnet sind, wobei die Zellen eine im wesentlichen gleichmäßige Wandstärke haben und ein zusammenhängendes Netzwerk bilden.

Eine derartige Trägerplatte ist aus der EP-A-0 266 701 bekannt. Bei der bekannten Trägerplatte haben die Zellen, zumindest in einer horizontalen Schnittebene, eine im wesentlichen gleichmäßige Wandstärke und bilden ein zusammenhängendes Netzwerk. Die bekannte Platte hat bereits ein relatives großes Zellvolumen. Dabei wird jedoch dieses freie Volumen mit Schaumstoff gefüllt und jede der Zellen weist an ihrer Unterseite eine Drainageöffnung auf, durch welche überschüssiges Wasser ablaufen soll. Das Schaumstoffmaterial behindert jedoch die rasche Aufnahme großer Wassermengen, zum Beispiel bei plötzlichen und heftigen Regenschauern, so daß die Gefahr besteht, daß das Wasser, welches nicht schnell genug in den Schaumstoff eindringen kann, an dessen Oberseite und an der Oberseite der Platte schnell abfließt und das Substrat unterspült. Diese Gefahr ist um so größer als die Oberseite der Schaumstoffüllungen gemäß der genannten Druckschrift mit der Plattenoberfläche bündig abschließen soll. Das Substrat kann dann teilweise weggeschwemmt und unterspült, zumindest jedoch ausgelaugt werden, so daß die Pflanzen der Dachbegrünung einen schlechteren Halt und auch ein schlechteres Nährstoffangebot vorfinden. Außerdem ist trotz des relativ großen Zellenvolumens die Wasserspeicherfähigkeit derartiger Trägerplatten relativ gering. Zum einen hat das Schwammaterial ein, wenn auch kleines Eigenvolumen, zum anderen verliert auch ein vollständig mit Wasser vollgesogener Schwamm in relativ kurzer Zeit den größten Teil des in ihm gespeicherten Wassers, das allein aufgrund der Schwerkraftwirkung im Schwammaterial nach unten sinkt und durch die im Boden der Zelle angeordnete Drainageöffnung ablaufen kann. Schon nach wenigen Stunden, spätestens jedoch nach ein bis zwei Tagen ist das Schwammaterial an seiner Oberseite und in seinem oberen Bereich praktisch trocken und speichert allenfalls noch in dem bodennahen Bereich geringe Mengen an Wasser, das jedoch nicht oder nur durch Verdunstung zu einem kleinen Teil zu den Pflanzen gelangen kann, die es an sich benötigen.

Die DE-A- 37 12 867 betrifft einen anderen Plattentyp, wobei die Platte aus einer tiefgezogenen Kunststoffolie gebildet wird, welche sehr schlechte Wärmedämmeigenschaften hat. Das Material hat eine sehr dünne Wandstärke und trotz einer vergleichsweise großen Härte wegen dieser dünnen Wandstärke nur eine geringe Tragfähigkeit. Das harte Material kann die darunterliegende Dachhaut beschädigen, so daß nicht alle Typen von Dachhautmaterialien für die Auflage einer solchen Wasserfangschale aus einem harten Kunststoffmaterial geeignet sind. Um eine ausreichende Tragfähigkeit zu erzielen, werden diese Platten mit Blähton oder dergleichen gefüllt. Die Wasserspeicherfähigkeit derartiger auf dem Markt befindlicher Platten beträgt nur etwa vier Liter pro Quadratmeter, ist also relativ gering; vor allem aber ist die Wärmedämmfähigkeit derartiger Platten fast verschwindend gering.

Gegenüber dem eingangs genannten Stand der Technik liegt der vorliegenden Erfindung die Aufgabe zugrunde, die Wasserspeicherfähigkeit und die Tragfähigkeit zusammen mit der Wärmedämmfähigkeit derartiger Dachplatten zu optimieren. Dabei ist zu berücksichtigen, daß die Forderung nach hoher Wasserspeicherfähigkeit der Tragfähigkeit und Wärmedämmfähigkeit im allgemein zuwider läuft, es sei denn, man könnte die Platten beliebig dick machen, was allerdings zum einem aus Kostengründen, zum anderen auch aus optischen Gründen für die Dachbegrünung unerwünscht ist. Außerdem muß eine gute Drainierfähigkeit der Platte gewährleistet sein, das heißt überschüssiges Wasser muß schnell und sicher abgeleitet werden können, ohne daß das auf den Platten aufliegende Substrat ausgelaugt, unterspült oder gar weggespült wird.

Die Lösung dieser Aufgabe gelingt mit einem Gegenstand, der die Merkmale des Anspruchs 1 aufweist. Eine solche Platte hat zum einen eine hohe Wasserspeicherfähigkeit, weiterhin kann überschüssiges Wasser durch mindestens teilweise vorgesehene Überläufe oder Drainagerinnen abfließen und schließlich hat diese Platte auch sehr gute Wärmedämmeigenschaften, da sie an der Unterseite geschlossen ist, das Wasser also nicht, zumindest nicht im Bereich jeder Zelle mit der Dachhaut in Berührung kommt. Wegen der netzwerkartigen Anordnung können die Zellen relativ viel Wasser aufnehmen, ohne daß durch diese Speicherfähigkeit die mechanische Stabilität der Platte wesentlich beeinträchtigt wird.

Mit Wandelementen, die im wesentlichen die gleiche Wandstärke haben und in Form eines Netzwerkes eine Gruppe von Zellen bilden, kann das Verhältnis von freiem Querschnitt zu der Gesamtfläche der Platte wesentlich günstiger, d.h. größer, gestaltet werden, ohne daß hierdurch die mechanische Stabilität der Platte beeinträchtigt wird. Geht man andererseits davon aus, daß die Speicherkapazität der herkömmlichen Platten ausreichend war, so ermöglicht die erfindungsgemäße Ausgestaltung der Platten es, bei gleicher Speicherkapazität für Wasser entweder den Plattenbeden dicker zu machen und damit die Fähigkeit der Platten zur Wärmedämmung zu verbessern oder aber bei gleicher Wärmedämmung die Gesamtstärke der Platten zu verringern, wodurch Material eingespart wird und die Dachauflage insgesamt weniger dick wird.

Dabei ist vorzugsweise an ein Netzwerk von eine Gruppe von einzelnen Zellen bildenden Wänden bzw. Wandelementen gedacht, welche nicht ein einfaches rechtwinkliges Muster bilden, da andere Netzwerkformen sich, bei gleichem Volumen, als mechanisch stabiler erwiesen haben. Gleichwohl ist auch ein einfaches Rechteck- oder Quadratnetzwerk bereits eine brauchbare Ausführungsform. In der bevorzugten Ausführungsform sind die Volumina der einzelnen Zellen im wesentlichen gleich. Bei gleicher Tiefe und senkrechten Wänden der Zellen bedingt dies, daß auch die freien Querschnittsflächen, gemessen parallel zur Plattenebene, im wesentlichen gleich sind. Durch eine solch gleichmäßige Gestaltung der einzelnen Zellen werden einerseits Schwachstellen im Bereich sehr großer Zellen, aber auch unnötige Verstärkungen im Bereich sehr kleiner Zellen vermieden.

Dabei hat es sich als zweckmäßig erwiesen, wenn mindestens zehn Zellen zu einer in einer Ebene angeordneten Gruppe zusammengefaßt sind. Auf einer Trägerplatte können mehrere derartige Gruppen angeordnet sein, wobei die Gruppen untereinander durch stärkere, und rechtwinklig zueinander verlaufende Wandabschnitte getrennt sein können.

Die Form der einzelnen Zellen ist weitgehend beliebig. Dabei sind Netzwerke denkbar, bei welchen alle Zellen im wesentlichen die gleiche Form haben oder bei welchen es eine feste Anzahl verschiedener Zellformen gibt, die sich jedoch innerhalb einer Gruppe immer wiederholen.

Dabei kann es jedoch zweckmäßig sein, wenn sich die Form der Zellen am Rand einer Gruppe von der Form der zellen im Inneren des Netzwerkes bzw. der das Netzwerk bildenden Gruppe unterscheidet.

Bevorzugt ist eine Ausführungsform der Erfindung, bei welcher der innere Bereich des Netzwerkes aus flächendeckend aneinandergereihten Sechsecken besteht. Dabei sollten alle Sechsecke die gleiche Form haben und mindestens bezüglich zwei zur Plattenfläche senkrechten und zu den Plattenkanten parallelen Ebene spiegelsymmetrisch sein.

Mindestens ein Teil der Zellwände weist im Bereich ihres jeweiligen oberen Randes einen Überlauf entweder zu einer Nachbarzelle oder zu einer Drainagerinne hin aufweist. Ein solcher Überlauf verhindert, daß bei starken Regenfällen oder zu starker Bewässerung der Platten das Wasser über den Rand der Zellen hinaussteigt und damit das daraufliegende Filtermaterial und das Substrat zu stark durchnäßt. Außerdem erreicht man so eine gleichmäßige Befüllung aller Zellen, wenn diese über entsprechend angeordnete Überläufe miteinander verbunden sind. Ein solcher Überlauf hat zweckmäßigerweise die Form einer die Oberkante einer Trennwand quer durchziehenden Rinne. Werden die Platten auf geneigten Flächen angeordnet, so sollte darauf geachtet werden, daß in Richtung des Dachgradienten untereinanderliegende Zellen jeweils durch einen Überlauf miteinander verbunden sind.

Zusätzlich sind in der bevorzugten Ausführungsform an der Plattenunterseite angeordnete Drainagekanäle vorgesehen, die unterhalb einer Reihe im wesentlichen hintereinander ausgerichteter Wandabschnitte verlaufen. Solche Drainagekanäle sind auch bei den herkömmlichen Platten bekannt. Während an der Oberseite der Platten Drainagerinnen vorgesehen sind, in welchen überschüssiges Wasser aus den Zellen abläuft, sind diese Drainagerinnen ihrerseits durch Bohrungen, die sich durch die Plattendicke erstrecken, mit den erwähnten Drainagekanälen verbunden, die ein größeres Fassungsvermögen haben und auch die bei starken Regenfällen anfallenden Wassermengen zuverlässig ableiten. Im Bereich derartiger Drainagekanäle ist jedoch selbstverständlich die Stärke des Plattenbodens verringert, was sich nachteilig auf die Wärmedämmung auswirkt. Dadurch, daß erfindungsgemäß diese Drainagekanäle jedoch nach Möglichkeit unterhalb einer Reihe im wesentlichen hintereinander ausgerichteten Wandabschnitte verlaufen, findet die Reduzierung der Stärke des Plattenbodens gerade in dem Bereich statt, in welchem an der Oberseite der Platte in Form der Reihe von Wandabschnitten genügend Material vorhanden ist, so daß die Wärmedämmeigenschaften der Platte aufgrund dieser Maßnahme durch die Drainagekanäle nur unwesentlich oder überhaupt nicht beeinträchtigt werden.

Wie sich schon aus der bereits geschilderten, aus gleichartigen Sechsecken bestehenden Ausführungsformen ergibt, ist generell eine Netzwerkgestaltung bevorzugt, bei welcher die Wände der Zellen aus geraden Wandabschnitten bestehen, und insbesondere eine solche, bei der mindestens ein Teil dieser Wandabschnitte unter einem Winkel, der von 90° verschieden ist, in benachbarte Wandabschnitte übergeht.

Gemäß einer anderen Ausführungsform der Erfindung kann jedoch mindestens ein Teil der Zellen gekrümmte Wandabschnitte aufweisen. Dabei hat sich eine Ausgestaltung als sehr gut brauchbar erwiesen, bei welcher das Netzwerk aus kreisförmigen Zellen und aus durch abgetrennte Kreiszwischenräume gebildeten Zellen besteht. Vorzugsweise bilden bei einer solchen Ausführungsform die Kreismittelpunkte entweder ein Dreiecksgitter oder ein Rechteck- bzw. ein Quadratgitter.

Dabei können die durch Kreiszwischenräume gebildeten Zellen dadurch entstehen, daß sich die Wandabschnitte jeweils benachbarter kreisförmiger Zellen berühren. Die Wandabschnitte verschiedener kreisförmiger Zellen können jedoch auch voneinander beabstandet sein und an ihren einander am nächsten gegenüberliegenden Stellen jeweils durch im wesentlichen gerade Wandelemente verbunden sein. In beiden Fällen kann man durch geeignete Wahl konstanter Wandstärken erreichen, daß die Querschnittfläche der kreisförmigen Zellen im wesentlichen der der in den Kreiszwischenräumen gebildeten Zellen entspricht. Im allgemeinen sollten bei den vorstehend genannen Ausführungsformen die Wandabschnitte der Zellen vertikal verlaufen. Es wäre jedoch auch ohne weiteres denkbar, die Wandabschnitte in Form eines bestimmten Profils, z.B. eines Trapezprofils, auszubilden. In diesem Fall wäre der parallel zur Plattenfläche gemessene freie Querschnitt der Zellen abhängig von der Tiefe, in der dieser Querschnitt gemessen wird. Dennoch wäre es auch bei einer solchen Ausführungsform ohne weiteres möglich, ein Netzwerk verschieden geformter Zellen zu bilden, bei denen alle Zellen im wesentlichen das gleiche Speichervolumen haben.

Die Erfindung wird nun mit weiteren Vorteilen, Merkmalen und Anwendungsmöglichkeiten anhand besonderer Ausführungsformen und der dazugehörigen Figuren beschrieben. Es zeigen:
Figur 1 die Draufsicht auf eine Trägerplatte von oben,
Figur 2 eine Schnittansicht entlang der Linie II-II in Figur 1,
Figur 3 eine Ansicht der Platte nach Figur 1 von unten und
Figur 4 und 5 je eine weitere Netzwerkgestaltung.

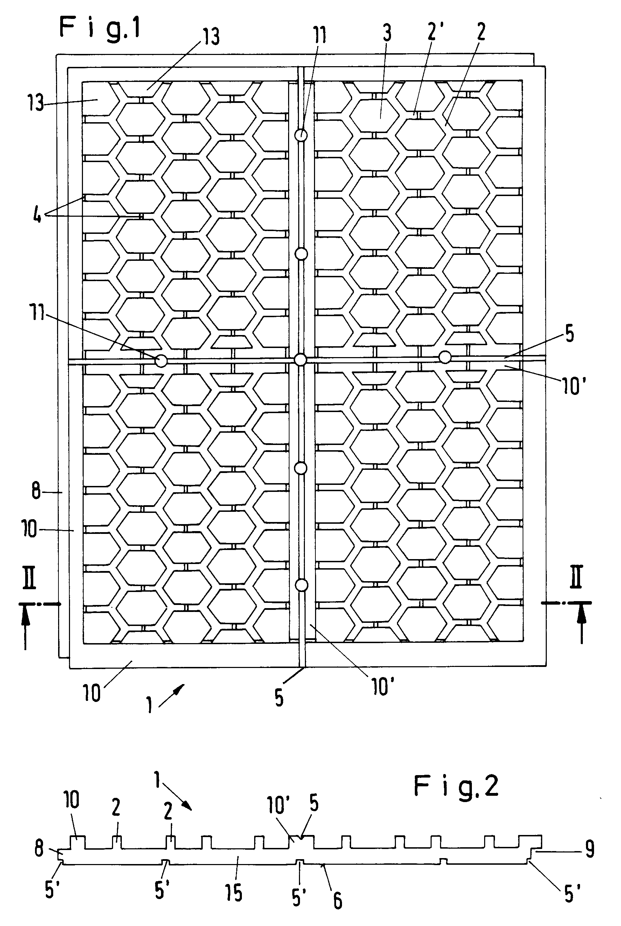

Die Platte 1 nach den Figuren 1 bis 3 besteht aus einem Plattenboden 15, auf dessen Oberseite sich mit dem Boden 15 einstückige vertikale Wände 10 bzw. Wandabschnitte 2, 2′ erstrecken. Die Platte hat im Bereich einer Außenwand an ihrer Unterseite an zwei über Eck zusammenhängenden Kanten eine Ausnehmung 9, in welche ein an den beiden übrigen Kanten entsprechender Nachbarplatten vorgesehener Vorsprung 8 eingreift, so daß mehrere Platten einander im Bereich der Ausnehmungen und Vorsprünge überlappend zu einer dichten Fläche zusammengelegt werden können. Anstelle des Vorsprunges und der Ausnehmung im unteren Kantenbereich der Platten wäre auch eine Nut/Federverbindung denkbar. Das Steckmaß der Platte nach Figur 1 beträgt 1 m x 1,25 m. Die Platte weist die bereits erwähnte umlaufende Außenwand 10 auf und ist durch Zwischenwände 10′ in vier gleich große rechteckige Felder aufgeteilt, welche je eine Gruppe von 37 Zellen enthalten. Dabei haben 19 innen gelegene Zellen alle die gleiche sechseckige Form und das gleiche Volumen, während die am Rand gelegenen Zellen 13 unter Anpassung an den vorgegebenen rechteckigen Rahmen eine abweichende Form und auch ein kleineres Volumen als die inneren Zellen haben.

Beim Verlegen der Trägerplatte 1 auf geneigten Flächen soll die längere Kante parallel zum Dachgradienten verlaufen. Die dann jeweils in Neigungsrichtung untereinanderliegenden Zellen 3 sind jeweils durch einen Überlauf 4 miteinander verbunden, so daß keine der Zellen an ihrer Oberseite überlaufen kann. Die jeweils untere einer solchen Reihe von Zellen ist ebenfalls über einen Überlauf mit einer Drainagerinne 5 verbunden, über die das Wasser durch Drainageöffnungen 11 in darunter gelegene Drainagekanäle 5′ abgeleitet wird. Am unteren Plattenrand sind entsprechende Überläufe nicht eingezeichnet, können jedoch auch hier vorgesehen werden.

Von den Drainagekanälen 5′ verläuft einer genau unter der mittleren Trennwand 10′ und je zwei weitere Drainagekanäle 5′ sind an den Außenkanten der Platte 1 am Übergang zur jeweiligen Nachbarplatte vorgesehen. Zwei weitere Drainagekanäle 5′ sind unter den Zellenfeldern der Platte angeordnet und zwar derart, daß sie im wesentlichen unter einer Reihe von zick-zack-förmig entlang einer Linie ausgerichteten Wandelementen 2 verlaufen, so daß in diesem Bereich die verbleibende Materialstärke des Bodens bzw. zwischen dem oberen und dem unteren freien Bereich der Trägerplatte nur an vereinzelten Stellen reduziert ist, so daß die Wärmedämmfähigkeit hierdurch nicht nennenswert beeinträchtigt wird. Werden Dächer mit derartigen Trägerplatten für Begrünung versehen, so kann auf einen bestimmten Anteil der sonst für das Dach vorgeschriebenen Wärmedämmung verzichtet werden; die sonstige Wärmedämmschicht des Daches kann also dünner ausgeführt werden.

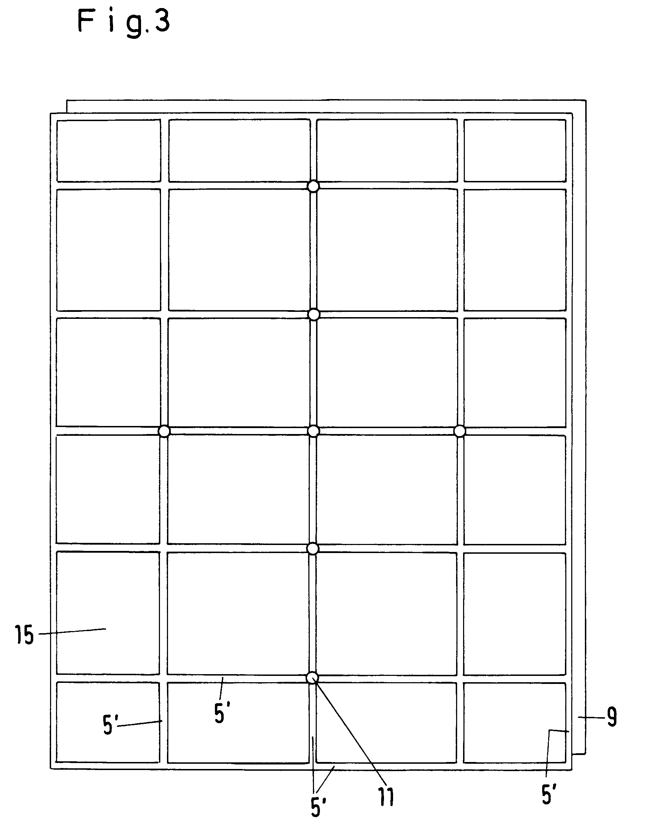

Das Muster der Drainagekanäle 5′ und der Drainageöffnungen 11, welche die Drainagerinnen 5 an der Oberseite der Platte mit den Drainagekanälen 5′ verbinden, ist in Figur 3 dargestellt.

In der hier dargestellten Ausführungsform beträgt der freie Querschnitt der Zellen 3 mehr als 55 % der Gesamtfläche der Platte 1. Bezogen auf eine von den Außenwänden 10 und den Zwischenwänden 10′ umschlossene Gruppe von Zellen 3 beträgt der freie Querschnitt der Zellen 3 sogar über 70 % des Gesamtflächenanteils.

Je nach der Art des verwendeten Materials, wofür nicht nur Polystyrol in Frage kommt, kann die Wandstärke auch geringer gewählt werden, so daß der Flächen- bzw. Volumenanteil der Zellen noch größer wird.

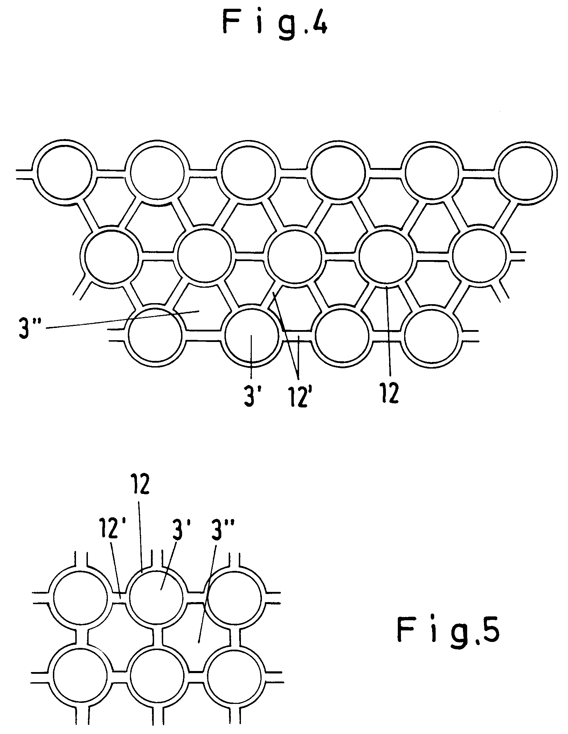

In den Figuren 4 und 5 sind zwei weitere Netzwerkgestaltungen dargestellt, die den Erfindungsgedanken ebenfalls verwirklichen. Dabei wechseln Zellen mit kreisförmigem Querschnitt und von Kreiszwischenräumen gebildete Zellen bzw. Reihen solcher Zellen einander ab. Bei der Ausführungsform gemäß Figur 4 liegen dabei die Mittelpunkte der Kreiszellen auf einem Dreieckgitter, während sie bei der Ausführungsform gemäß Figur 5 auf einem Quadratgitter liegen. Auf diese Weise werden außer den kreisförmigen Zellen 3′ auch Zellen 3˝ gebildet, die teilweise gekrümmte Wandabschnitte 12 und teilweise gerade Wandabschnitte 12′ aufweisen. Dabei könnten die kreisförmigen Zellen auch so dicht aneinander gerückt werden, daß sich ihre äußeren Wandabschnitte berühren, so daß die geraden Wandabschnitte 12′ entfallen könnten.

Auch derartige Netzwerke von Zellen könnten selbstverständlich ähnlich wie das Sechsecknetz in einen rechteckigen Rahmen eingegliedert werden. Ebenso können die einzelnen Zellen auch durch in den Figuren 4 und 5 nicht dargestellte Überläufe miteinander verbunden werden.

Mit der vorliegenden Erfindung ist es gelungen, die bekannten Trägerplatten für Dachbegrünungen hinsichtlich ihrer Wärmedämmung, ihrer Speicherkapazität für Wasser und auch hinsichtlich einer geringen Gesamtdicke der Platten zu optimieren.

Soweit in der vorliegenden Anmeldung von einer im wesentlichen gleichen Wandstärke der Zellen die Rede ist, ist dieser Begriff weit auszulegen, so daß verschiedene Wandelemente, ohnehin abgesehen von den Zwischen- und Außenwänden 10′, 10, Wandstärken haben können, die um bis zum 30 % voneinander abweichen. Dies gilt insbesondere für Netzwerke, in denen aus geometrischen Gründen Bereiche höherer und niedrigerer Stabilität entstehen, wenn überall die exakt gleiche Wandstärke vorgesehen wird. In solchen Fällen können die ansonsten stabileren Bereicheeine geringere Wandstärke aufweisen als die, aus rein geometrischen Gründen, weniger stabilen Bereiche.

Zu der in Figur 1 dargestellten Ausführungsform ist noch zu bemerken, daß die die Zellen 3 bildenden Sechsecke keine gleichseitigen Sechsecke sind, sondern daß bei diesen Sechsecken zwei einander gegegnüberliegende Seiten 2′ etwas länger sind als die übrigen Seiten 2. Die Seiten 2′ sind diejenigen, die bei der Verlegung auf geneigten Dächern im wesentlichen horizontal, d.h. parallel zu der kürzeren Plattenkante verlaufen. Diese spezielle Gestaltung hängt mit der Optimierung der Trägerplatte hinsichtlich einer guten Speicherkapazität für Wasser zusammen.

## Patentansprüche

1. Trägerplatte für Dachbegrünungen, welche aus einem Wärmedämmaterial besteht, wobei die Platte (1) mindestens teilweise durch Zwischenwände (2, 2'; 12, 12') abgetrennte Zellen (3, 3', 3'') zur Speicherung von Wasser aufweist, sowie Drainageeinrichtungen (4, 5, 5'), welche an den Zellen angeordnet sind, wobei die Zellen (3, 3', 3'') eine im wesentlichen gleichmäßige Wandstärke haben und ein zusammenhängendes Netzwerk bilden, dadurch gekennzeichnet, daß die Zellen an ihrer Unterseite geschlossen sind, daß mindestens ein Teil der Zellwände im Bereich ihres oberen Randes einen Überlauf (4) zu einer Nachbarzelle oder einer Drainagerinne (5) aufweisen und daß an der Plattenunterseite (6) angeordnete Drainagekanäle (5') unterhalb einer Reihe im wesentlichen hintereinander ausgerichteter Wandabschnitte (2) verlaufen und über Drainageöffnungen (11) mit den an der Oberseite der Platte angeordneten Drainagerinnen (5) verbunden sind.

2. Trägerplatte nach Anspruch 1, dadurch gekennzeichnet, daß die Drainagerinnen in der Oberfläche im wesentlichen gerade verlaufender Wandabschnitte vorgesehen sind.

3. Trägerplatte nach einem der Ansprüche 1 oder 3, dadurch gekennzeichnet, daß die Zellen (13) am Rand einer Gruppe eine von den übrigen Zellen (3, 3', 3'') abweichende Form haben.

4. Trägerplatte nach einem der Ansprüche 1 bis 3, dadurch gekennzeichnet, daß die Wände aus ebenen Wandabschnitten (2, 2') bestehen.

5. Trägerplatte nach einem der Ansprüche 1 bis 4, dadurch gekennzeichnet, daß die Wände der Zellen senkrecht verlaufen.

6. Trägerplatte nach Anspruch 5, dadurch gekennzeichnet, daß mindestens ein Teil der Wandabschnitte (2, 2') unter einem Winkel ungleich 90° in benachbarte Wandabschnitte (2, 2') übergeht.

7. Trägerplatte nach Anspruch 6, dadurch gekennzeichnet, daß mindestens der innere Bereich des Netzwerkes (7) aus flächendeckend aneinandergereihten Sechsecken besteht.

8. Trägerplatte nach Anspruch 7, dadurch gekennzeichnet, daß die Sechsecke gleichartig und bezüglich zwei zur Plattenfläche senkrechten und zu den Plattenkanten parallelen Ebenen spiegelsymmetrisch sind.

9. Trägerplatte nach einem der Ansprüche 1 bis 8, dadurch gekennzeichnet, daß mindestens ein Teil der Zellwände im Bereich ihres oberen Randes einen Überlauf (4) zu einer Nachbarzelle (3, 3', 3'') oder einer Drainageeinrichtung (5) aufweist.

10. Trägerplatte nach einem der Ansprüche 1 bis 9, dadurch gekennzeichnet, daß an der Plattenunterseite (6) angeordnete Drainagekanäle (5') unterhalb einer Reihe im wesentlichen hintereinander ausgerichteter Wandabschnitte (2) verläuft.

11. Trägerplatte nach einem der Ansprüche 1 bis 10, dadurch gekennzeichnet, daß mindestens ein Teil der Zellen (3', 3'') gekrümmte Wandabschnitte (12) aufweist.

12. Trägerplatte nach Anspruch 11, dadurch gekennzeichnet, daß das Netzwerk (7) aus kreisförmigen und aus durch abgetrennte Kreiszwischenräume gebildeten Zellen (3', 3'') besteht.

13. Trägerplatte nach Anspruch 12, dadurch gekennzeichnet, daß die Kreismittelpunkte der Zellen ein Dreiecksgitter bilden.

14. Trägerplatte nach Anspruch 12, dadurch gekennzeichnet, daß die Kreismittelpunkte der Zellen ein Rechteckgitter bilden.

15. Trägerplatte nach einem der Ansprüche 12 bis 14, dadurch gekennzeichnet, daß sich die Wandabschnitte (12) benachbarter Kreiszellen (3') berühren.

16. Trägerplatte nach einem der Ansprüche 12 bis 14, dadurch gekennzeichnet, daß die Wandabschnitte (12) verschiedener kreisförmiger Zellen (3') im Abstand voneinander liegen und an ihren einander am nächsten liegenden Stellen durch im wesentlichen gerade Wandstege miteinander verbunden sind.

## Claims

1. A roof turfing support plate constructed from a heat insulating material, wherein the plate (1) is at least partially provided with cells (3, 3', 3'') for storage of water separated by dividing walls (2, 2';12, 12'); wherein drainage means (4, 5, 5') are provided for the cells; and wherein the cells each have a substantially similar wall strength and together form an interconnected network, characterised in that the cells are closed on their underside, in that at least a portion of the cell walls is provided near the upper edge with either an overflow (4) to a neighbouring cell or with a drainage groove (5) and in that drainage channels (5') are provided on the underside (6) of the plate beneath a row of wall sections (2) which are aligned substantially directly one behind the other, the drainage channels (5') being connected to the drainage grooves (5) located on the upper side of the plate by drainage openings (11).

2. Support plate according to claim 1, characterised in that the drainage channels on the upper surface are provided in substantially straight wall sections.

3. Support plate according to claims 1 or 2, characterised in that the cells (13) at the edge of a group have a different shape to that of the remaining cells (3, 3', 3'').

4. Support plate according to any one of claims 1 to 3, characterised in that the walls are constituted by wall sections (2, 2') of equal height.

5. Support plate according to any one of claims 1 to 4, characterised in that the cell walls are vertical.

6. Support plate according to claim 5, characterised in that at least a portion of the wall sections (2, 2') join neighbouring wall sections at an angle other than 90°.

7. Support plate according to claim 6, characterised in that at least the inner region of the network (7) consists of abutting hexagons covering the surface.

8. Support plate according to claim 7, characterised in that the hexagons are uniform and display mirror symmetry along two planes lying at right angles to the plate surface and parallel to its edges.

9. Support plate according to any one of claims 1 to 8, characterised in that at least a portion of the cell walls is provided near the upper edge with either an overflow (4) to a neighbouring cell (3, 3', 3'') or with drainage means (5).

10. Support plate according to any one of claims 1 to 9, characterised in that drainage channels (5') are provided on the underside (6) of the plate beneath a row of wall sections (2) which are aligned substantially directly one behind the other.

11. Support plate according to any one of claims 1 to 10, characterised in that at least a portion of the cells (3',3'') are provided with curved wall sections (12).

12. Support plate according to claim 11, characterised in that the network (7) of cells (3', 3'') is shaped from circles and their interstices.

13. Support plate according to claim 12, characterised in that the centres of the circular cells form a triangular framework.

14. Support plate according to claim 12, characterised in that the centres of the circular cells form a rectangular network.

15. Support plate according to any one of claims 12 to 14, characterised in that the wall sections (12) of neighbouring circular cells (3') touch one another.

16. Support plate according to any one of claims 12 to 14, characterised in that the wall sections (12) of different circular cells (3') are distanced from each other and are connected to each other by a substantially straight wall web between their closest points.

## Revendications

1. Plaque porteuse pour gazonner un toit, laquelle est constituée d'un matériau isolant à la chaleur, la plaque (1) présentant au moins en partie des cellules séparées (3, 3', 3'') par des parois (2, 2' ; 12, 12') pour le stockage de l'eau, de même que des dispositifs de drainage (4, 5, 5'), lesquels sont disposés sur les cellules, les cellules (3, 3', 3'') présentant une épaisseur de paroi régulière et formant un réseau continu, caractérisée en ce que les cellules sont fermées sur leur base inférieure, en ce qu'au moins une partie des parois des cellules présente au niveau de leurs contours supérieurs un trop-plein (4) relié à une cellule voisine ou à une gouttière de drainage (5) et en ce que des canaux de drainage (5') disposés sur la face inférieure de la plaque sont agencés sous une suite de tronçons (2) de paroi alignés pour l'essentiel les uns derrière les autres et sont reliés aux gouttières (5) de drainage disposées sur la face supérieure de la plaque par des orifices de drainage (11).

2. Plaque porteuse selon la revendication 1, caractérisée en ce que les gouttières de drainage sont placées pour l'essentiel directement à la surface de l'agencement des tronçons de paroi.

3. Plaque porteuse selon la revendication 1 ou 2, caractérisée en ce que les cellules (13) en bordure du groupe des autres cellules (3, 3', 3'') présentent des formes anormales.

4. Plaque porteuse selon l'une quelconque des revendications 1 à 3, caractérisée en ce que les parois se composent de tronçons de paroi plans (2, 2').

5. Plaque porteuse selon l'une quelconque des revendications 1 à 4, caractérisée en ce que les parois sont agencées perpendiculairement aux cellules.

6. Plaque porteuse selon la revendication 5, caractérisée en ce qu'au moins une partie des tronçons de paroi (2, 2') présente un angle de raccordement aux tronçons de paroi adjacents (2, 2') différent de 90°.

7. Plaque porteuse selon la revendication 6, caractérisée en ce qu'au moins la zone intérieure du réseau (7) se compose d'hexagones recouvrant la surface rangés séparément les uns des autres.

8. Plaque porteuse selon la revendication 7, caractérisée en ce que les hexagones sont analogues, perpendiculaires aux deux surfaces de la plaque et symétriques par rapport aux plans parallèles aux arêtes de la plaque.

9. Plaque porteuse selon l'une quelconque des revendications 1 à 8 caractérisée en ce qu'une partie au moins des parois d'une cellule présente au niveau de leurs contours supérieurs un trop-plein (4) relié à une cellule (3, 3', 3'') voisine ou à un dispositif de drainage (5).

10. Plaque porteuse selon l'une quelconque des revendications 1 à 9, caractérisée en ce que des canaux de drainage (5') disposés sur la face inférieure de la plaque (6) sont agencés sous une suite de tronçons de paroi (2) alignés pour l'essentiel les uns derrière les autres.

11. Plaque porteuse selon l'une quelconque des revendications 1 à 10, caractérisée en ce qu'au moins une partie des cellules (3', 3'') présente des tronçons de paroi courbés (12).

12. Plaque porteuse selon la revendication 11, caractérisée en ce que le réseau (7) est constitué de cellules (3', 3'') de forme circulaire séparées par des parois circulaires.

13. Plaque porteuse selon la revendication 12, caractérisée en ce que les centres des cercles des cellules forment une grille de triangles.

14. Plaque porteuse selon la revendication 12, caractérisée en ce que les centres des cercles des cellules forment une grille de rectangles.

15. Plaque porteuse selon l'une quelconque des revendications 12 à 14, caractérisée en ce que les tronçons de paroi (12) sont en contact avec les cellules circulaires contigues (3').

16. Plaque porteuse selon l'une quelconque des revendications 12 à 14, caractérisée en ce que les tronçons de paroi (12) des différentes cellules de forme circulaire (3') se trouvent distants les uns des autres et ceux de cellules se trouvant à proximité sont reliés entre eux pour l'essentiel directement avec des entretoises.
